(19) **Europäisches Patentamt**
**European Patent Office**
**Office européen des brevets**

(11) **EP 2 559 570 B1**

(12) **EUROPEAN PATENT SPECIFICATION**

(45) Date of publication and mention
of the grant of the patent:
**08.03.2017 Bulletin 2017/10**

(51) Int Cl.:
*B60C 9/08* (2006.01)     *B60C 9/00* (2006.01)
*B60C 9/20* (2006.01)     *B60C 17/00* (2006.01)

(21) Application number: **11768965.3**

(86) International application number:
**PCT/JP2011/059425**

(22) Date of filing: **15.04.2011**

(87) International publication number:
**WO 2011/129444 (20.10.2011 Gazette 2011/42)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2010   JP 2010203721**
**15.04.2010   JP 2010093715**

(43) Date of publication of application:
**20.02.2013   Bulletin 2013/08**

(73) Proprietor: **Bridgestone Corporation
Tokyo 104-8340 (JP)**

(72) Inventor: **YOSHIMI Takuya
Kodaira-shi
Tokyo 187-0031 (JP)**

(74) Representative: **Lamb, Martin John Carstairs
Marks & Clerk LLP
90 Long Acre
London WC2E 9RA (GB)**

(56) References cited:
**JP-A- 2005 199 763     JP-A- 2009 001 073
JP-A- 2009 057 008     JP-A- 2010 042 762
JP-A- 2010 070 119     US-A1- 2002 195 185**

**Description**

Technical Field

The present invention relates to a pneumatic tire (hereinafter, also simply referred to as "tire", and specifically to a pneumatic radial tire for passenger cars relating to improvement of the carcass cord and the carcass structure.

Background Art

It is generally known that, with respect to the pneumatic radial tire for passenger cars, a reinforcing cord for a carcass ply which has the smaller difference between the physical properties at a high temperature such as during high speed running or during continuous running and the physical properties at a low temperature where the temperature of the tire is equal to the outside air temperature, and which has the higher cord modulus of elasticity is used, the stabler the handling becomes, thereby improving the driving stability.

In addition, there has been a problem that, although polyethylene terephthalate (PET) used as a reinforcing cord of a carcass ply has an extremely favorable fatigue performance and is a suitable material when used for a carcass, a stable drivability is not demonstrated since the cord modulus of elasticity at a high temperature decreases considerably. For these reasons, in a high performance tire requiring a driving stability such as a wide tire or a low profile tire, a cellulose fiber such as rayon is generally applied for a reinforcing cord of a carcass ply (for example, Patent Document 1).

On the other hand, widely put to practical use recently is a side-reinforced type run flat tire in which, in order to run safely even when the inner pressure of the tire decreases abnormally or when the tire is punctured, a side-reinforcing rubber layer is disposed in a side wall portion. Since such a run flat tire is easy to deflect during run-flat running, a cellulose fiber having high elasticity and high dimensional stability has been generally used as a reinforcing cord for a carcass ply of a side-reinforced type run flat tire.

For example, Patent Document 2 discloses a technique which improves run-flat running distance by using a high rigidity cellulose fiber as a reinforcing material for a carcass ply of a run flat tire.

Related Art Documents

Patent Documents

Patent Document 1: Japanese Unexamined Patent Application Publication No. 07-081331 (claims and the like)
Patent Document 2: Japanese Unexamined Patent Application Publication No. 2005-199763 (claims and the like), which discloses a pneumatic tire according to the preamble of claim 1.

Reference is also made to JP2009-070119, JP2009-001073, JP 2009-057008 and US 2002/195185.

Summary of the Invention

Problems to be Solved by the Invention

A cellulose fiber such as rayon, however, has not been widely used since it has drawbacks that its fatigue performance is poor while a high rigidity is demonstrated and that, although the driving stability is good, the product durability is poor when applied to a carcass cord. Namely, when a high rigidity carcass cord is used, an effect of suppressing deformation at the time when a load is applied on a tire is obtained and an input to a carcass cord is reduced, which results in improvement in the durability. It is however hard to secure fatigue resistance. In total, it is hard to secure a desired durability, which has been problematic.

On the other hand, as a general method of securing the fatigue performance, a method in which a twist coefficient is increased is exemplified. There arises, however, a problem of decrease in the cord strength, a loss of the characteristics of high rigidity or the like. Accordingly, establishment of a technique has been demanded in which, without generating such different problems, deterioration in fatigue performance can be improved when a high rigidity fiber is used for a carcass cord.

In this regard, also in the run flat tire described in Patent Document 2, the cord compression fatigue performance is not necessarily sufficient and there has been room for improvement in the running durability at the time of normal inner pressure. Due to its rigidity, the vertical strength of spring becomes high and thus deteriorates the ride quality or the like. Improvement of the product performance therefore has also been demanded.

Accordingly, an object of the present invention is to provide a pneumatic tire in which the driving stability is improved without compromising the durability by suppressing deterioration in the fatigue performance when a high rigidity cellulose fiber is used for a carcass cord.

Means for Solving the Problems

The present inventor intensively studied in order to overcome the drawbacks of a cellulose fiber cord that the fatigue performance is low and thus the product durability is poor while the modulus of elasticity at the time of low temperature to the time of high temperature is stable, a tire as a single body exhibits a high cornering power and the driving stability is good. As the result, the present inventor discovered that the balance between the driving stability and the product durability can be maintained by using as the carcass cord a high rigidity cellulose fiber cord having excellent driving stability and by improving the carcass structure, thereby completing the present invention.

Namely, the pneumatic tire of the present invention is a pneumatic tire composed of tread portions, a pair of side wall portions extending from side portions of the tread portions to inward in the tire radial direction ,and bead portions connected to the inner end in the tire radial direction of the side wall portions, which are reinforced by a carcass composed of one or more carcass plies composed of cellulose fiber cord covered with a coating rubber, wherein

the tensile modulus of elasticity of the cellulose fiber cord under a stress load of 29.4N per cord at a temperature of 180°C is 40 cN/dtex or higher, and all of the carcass cords are turned up around each bead core embedded at the pair of bead portions from the inside toward the outside of the tire.

The turn-up end portion of the carcass ply is turned up at least to the upper end position in the tire radial direction of the bead core and the height of the turn-up end portion of the carcass ply in the tire radial direction from the upper end portion of the bead core in the tire radial direction is 15 mm or smaller. It is preferable that a bead filler disposed outside in the tire radial direction of the bead core has a triangle shaped cross section having a height of 15 mm or smaller. It is more suitable that the turn-up end portion ofthe carcass ply is turned up at least to the upper end position in the tire radial direction of the bead core, the height of the turn-up end portion of the carcass ply in the tire radial direction from the upper end portion of the bead core in the tire radial direction is 15 mm or smaller, and a bead filler disposed outside in the tire radial direction of the bead core has a triangle shaped cross section having a height of 15 mm or smaller.

In the present invention, it is preferable that the tensile modulus of elasticity of the cellulose fiber cord under a stress load of 29.4N per cord at a temperature of 180°C is 100 cN/dtex or lower, and it is suitable that the cellulose fiber cord is a lyocell fiber cord. In addition, it is preferable that the twist coefficient Nt of the cellulose fiber cord represented by the following formula:

$$\mathrm{Nt} = \tan\theta = 0.001 \times \mathrm{N} \times \sqrt{(0.125 \times \mathrm{D}/\rho)}$$

(where N is the number of twist of the cord (/10 cm), p is the specific gravity of the cord (g/cm$^3$) and D is the value which is half of the total decitex of the cord (dtex)) is from 0.5 to 0.8. Further, it is suitable that the total denier of the cellulose fiber cord is from 3500 dtex to 5600 dtex, and it is suitable that the height of the turn-up end portion of the carcass ply in the tire radial direction from the upper end portion of the bead core in the tire radial direction is 10 mm or smaller.

The tire of the present invention can be a run flat tire comprising a side-reinforcing rubber layer having a crescent-shaped cross section in the tire width direction all or almost all over the side wall portion along the inner surface of the carcass.

Effects of the Invention

According to the present invention, by employing the above-mentioned constitution, a pneumatic tire in which the driving stability is improved without compromising the durability can be attained.

Brief Description of the Drawings

Fig. 1 is a half sectional view of one example of a pneumatic tire of the present invention in the width direction.
Fig. 2 is one example of a graph illustrating the stress (load) - elongation curve of a reinforcing cord.
Fig. 3 is a half sectional view of a run flat tire according to another embodiment of the present invention in the width direction.

Fig. 4 is a half sectional view illustrating still another example of a pneumatic tire of the present invention in the width direction.

Fig. 5 is a half sectional view illustrating still another example of a pneumatic tire of the present invention in the width direction.

Modes for Carrying out the Invention

Hereinafter, embodiments of the present invention will be specifically explained with reference to the Drawings.

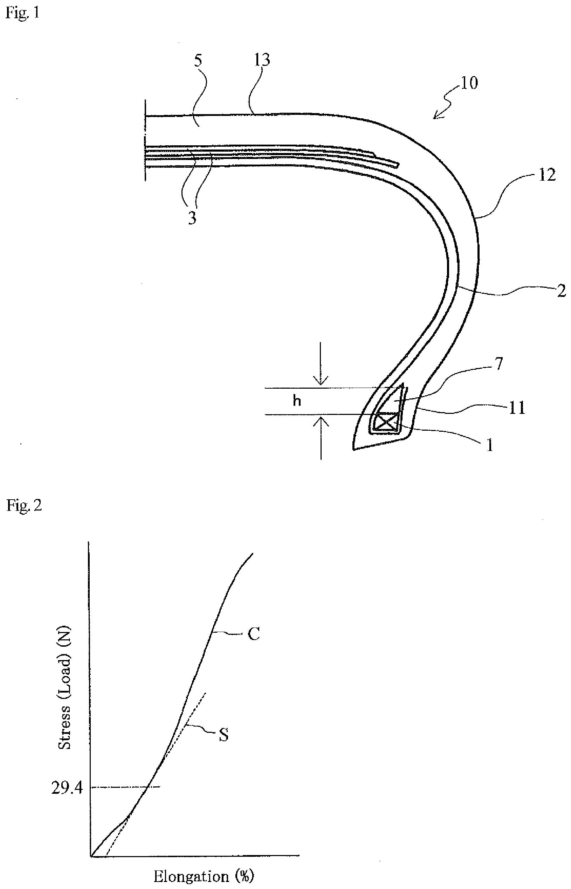

Fig. 1 is a half sectional view of one example of a pneumatic tire of the present invention in the width direction. A tire 10 as illustrated in the figure is composed of tread portions 13, a pair of side wall portions 12 extending from side portions of the tread portions 13 to inward in the tire radial direction, and bead portions 11 connected to the inner end in the tire radial direction of the side wall portions 12.

A carcass 2 forms a skeletal structure of the tire, and reinforces the tread portions 13, the side wall portions 12 and the bead portions 11. In the present invention, all of the carcass cords constituting the carcass 2 are turned up around each bead core 1 embedded at the pair of bead portions 11 from the inside toward the outside of the tire. The carcass 2 is constituted by one or more carcass plies, and at the same time, has a body portion extending toroidally between a pair of bead cores 1 and a pair of turn-up portions which are rolled up around the bead core 1 from the inside to the outside in the tire width direction outward in the tire radial direction.

The carcass 2 in Fig. 1 is composed of one carcass ply composed of cords covered with a coating rubber, and a plurality of the carcass plies may be used.

In fig. 1, a belt 3 is composed of one or more belt layers disposed in the outside in the tire radial direction of a crown portion of the carcass 2. The belt 3 in the figure is composed of two belt layers, and the number thereof is not restricted thereto in the present invention.

In the present invention, it is crucial that the cord of the carcass ply (hereinafter, referred to as "reinforcing cord" for short) is a cellulose fiber cord, preferably a lyocell fiber cord having higher modulus of elasticity compared to rayon fiber, and the tensile modulus of elasticity of the cord under a stress load of 29.4N per cord at a temperature of 180°C is 40 cN/dtex or higher, and is preferably 100 cN/dtex or lower. Since the modulus of elasticity of cellulose fiber at the time of low temperature to the time of high temperature is stable, a tire as a single body can demonstrate a high cornering power by using a cellulose fiber cord as a reinforcing cord of a carcass ply. By using such a high rigidity cellulose fiber cord, an effect of improving driving stability can be obtained. When the cord modulus of elasticity is less than 40 cN/dtex, deflection of a tire during running cannot be suppressed, which deteriorates driving stability. On the other hand, when the cord modulus of elasticity is over 100cN/dtex, the vertical strength of spring becomes too high and ride quality may deteriorate, and manufacturing failures such as cord protrusion may be induced depending on the tire sizes in the conventional molding method The tensile modulus of elasticity of the above-mentioned cellulose fiber cord under a stress load of 29.4N per cord at a temperature of 180°C is more suitably from 50 cN/dtex to 75 cN/dtex.

The tensile modulus of elasticity under a stress load of 29.4N per cord at a temperature of 180°C is in question here because the generated tension at the carcass (side portion) at a temperature which is assumed in the conditions such as during high speed running, low inner pressure running and run-flat running is about 29.4N. In the present invention, when two or more carcass plies are used, all of the carcass plies need to be composed of the above-mentioned fiber cord.

The modulus of elasticity of such a reinforcing cord can be calculated by using a stress (load)-elongation curve of the reinforcing cord. Fig. 2 is one example of a graph illustrating the stress (load)-elongation curve of the reinforcing cord. As illustrated in Fig. 2, a force applied to one cord at the time when a tire is inflated to the inner pressure to the time when load is applied to a tire is estimated as 29.4N, draw a tangent line S on the stress-elongation curve C at a temperature of 180°C under a stress load of 29.4N, and the inclination of the tangent line S is calculated as the cord modulus of elasticity. The cord modulus of elasticity represented by the unit "N/% (180°C·29.4N)" and the unit "N/dtex (180°C·29.4N)" can be determined by using the stress-elongation curve of the same reinforcing cord. For example, in a cord structure having 1840 dtex/3,27.6 N/% (180°C·29.4N) corresponds to 50 cN/dtex (180°C·29.4 N).

The reinforcing cord can be manufacture by subjecting a raw fiber cord to a dip treatment. By subjecting a fiber cord to a dip treatment, that is, to a dip treatment in a condition in which a predetermined tension is applied, a reinforcing cord having a predetermined rigidity with respect to the extension direction of the fiber can be obtained.

For example, a lyocell fiber cord can be made a reinforcing cord having a cord modulus of elasticity of 46.1 cN/dtex (180°C·29.4N) or higher by applying a dip tension, for example, by increasing the dip tension up to 0.13 cN/dtex or higher to be subjected to a dip treatment.

In the present invention, examples of the cellulose fiber also include rayon and lyocell as well as those using as the raw material a cellulose derivative obtained by chemically esterifying or etherifying a natural polymer cellulose. Among others, suitably in the present invention, it is preferable that a lyocell fiber which has a higher elasticity compared to a rayon fiber and in which the balance between the rigidity due to twist and the fatigue resistance is easy to be maintained is used. In particular, since the lyocell fiber has a high dimensional stability, the shrinkage of the diameter thereof during manufacturing (vulcanization) does not occur and a characteristic is obtained that a carcass ply is hard to fall out from a bead. When another fiber is used, due to a thermal shrinkage or decrease in modulus of elasticity in the step of heat treatment during manufacturing, a carcass ply may fall out from a bead portion or the character of the bead is disturbed due to the disturbance of a carcass ply around the bead, which may result in inducing decrease in the function of the carcass ply or deterioration of the uniformity. Such a lyocell fiber is, for example, a cellulose fiber obtained from a raw cellulose by solvent spinning process. For example, as described in Japanese Patent Publication No. 60-28848 or Japanese Patent Laid-Open No. 11-504995, a solution containing a non-solvent such as a cellulose dissolved in an organic solvent and water is spun in the air or in a non-precipitable medium, and at this time, the cellulose fiber can be obtained by drawing at a higher speed than the speed at which a fiber forming solution output from a spinning nozzle is fed out to draw at a draw ratio of 3 or higher, followed by being subjected to non-solvent treatment to obtain the cellulose fiber.

In the present invention, it is preferable that
the twist coefficient Nt of the cellulose fiber cord represented by the following formula:

$$ Nt = \tan\theta = 0.001 \times N \times \sqrt{(0.125 \times D/\rho)} $$

(where N is the number of twist of the cord (/10 cm), $\rho$ is the specific gravity of the cord (g/cm$^3$) and D is the value which is half of the total decitex of the cord (dtex)) is from 0.5 to 0.8. When the twist coefficient is less than 0.5, the fatigue performance of the cord may deteriorate. Since the fiber has little thermal contraction, the tire uniformity deteriorates, which is not preferable. On the other hand, when the twist coefficient is more than 0.8, the cord strength of the reinforcing cord decreases, which may lead to decrease in the cut performance. The cord modulus of elasticity cannot be in an appropriate range which is the main requirement for promoting a low rigidity, and it becomes difficult to secure a sufficient driving performance.

In the present invention, preferably, the total dernier of the reinforcing cord is from 3500 dtex to 5600 dtex. This is because when the dernier of the reinforcing cord is less than 3500dtex, the cord strength of the reinforcing cord decreases, which may lead to decrease in the cut performance. On the other hand, when the dernier of the reinforcing cord is more than 5600 dtex, the gauge thereof becomes thick, and an irregularity on the side wall portion 12 is generated, which is not preferable.

Still further, in the present invention, preferably, the melting point of the reinforcing cord is 300°C or higher. The reason is as follows. As mentioned below, the pneumatic tire of the present invention can be made into a run flat tire. In this case, since a large amount of heat is generated during run-flat running, the reinforcing cord melts during run-flat running if the melting point of the reinforcing cord is lower than 300°C. As the result, the run-flat durability may decrease.

In the present invention, preferably, the turn-up end portion of the carcass ply is turned up at least to the upper end position in the tire radial direction of the bead core 1, and the height h of the turn-up end portion of the carcass ply in the tire radial direction from the upper end portion of the bead core 1 in the tire radial direction is 15 mm or smaller and particularly 10 mm or less. The reason is as follows. When the height h of the turn-up end portion of the carcass ply from the upper end portion of the bead core 1 in the tire radial direction is more than 15 mm, a compression input is applied to a rim flange portion and thus the end of the neighboring reinforcing cord is fatigued. The fatigued portion as a rupture nucleus induces detachment of a rubber layer or the like, and therefore durability of a tire during normal running cannot be sufficiently improved in some cases. To describe in more detail in this respect, a compression input is repeatedly applied to a turn-up portion of a tire basically from an input of a product, decrease in the strength of the carcass cord of the turn-up portion is accelerated and the tire may break due to carcass cord breakage. The carcass cord is therefore expected to have a tendency to decrease in strength by the compression input, namely fatigue performance. A compression input is inevitably applied to the contact point between a rim flange and the tire as a fulcrum when a load is applied. Accordingly, in the present invention, by setting the length of the turn-up portion of the carcass ply to 15 mm or smaller, a structure is applied in which an organic fiber is not disposed at a portion where a compression input is applied, whereby tire performances such as driving stability can be controlled without taking into account the fatigue performance of the cord.

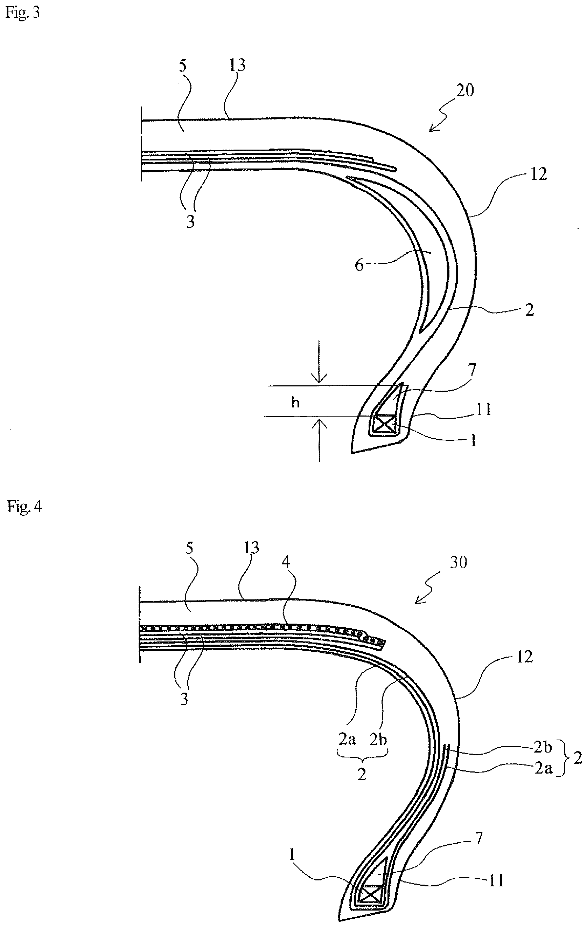

Fig. 3 illustrates a half sectional view of a run flat tire 20 according to another embodiment of the present invention in the width direction. The run flat tire 20 illustrated in Fig. 3 is the same tire as illustrated in Fig. 1 in that the tire is composed of tread portions 13, a pair of side wall portions 12 extending from side portions of the tread portions 13 to inward in the tire radius direction, and bead portions 11 connected to the inner end in the tire radius direction of the side wall portions 12, and comprises a pair of side-reinforcing rubber layers 6 having a crescent-shaped cross section in the tire width direction all or almost all over the side wall portion along the inner surface of the carcass. In the tire illustrated the figure, bead filler 7 is disposed on the outer side of a ring-shaped bead core 1 in the tire radial direction which is respectively embedded in the bead portion 11, and further, a belt composed of two belt layers 3 is disposed on the outer side of the carcass 2 in the tire radial direction at the tread portion 13.

Further, Fig. 4 illustrates a half sectional view illustrating still another example of a pneumatic tire of the present invention in the width direction. The pneumatic tire 30 illustrated in the figure comprises a pair of bead portions 11 and side wall portions 12, and tread portions 13 connected to side wall portions 12, and comprises as a skeleton a carcass 2 which is composed of one or more, in the illustrated example, two carcass plies 2a,2b which extend toroidally between a pair of bead portions 1 embedded respectively in the pair of bead portions 11. In the outer side of the crown portion of the carcass 2 in the tire radial direction, a belt layer composed of one or more, in the illustrated example, two layers of belts 3, a belt reinforcing layer 4 composed of a cap ply covering the whole width of the belt layer, and tread 5 are disposed in the order mentioned.

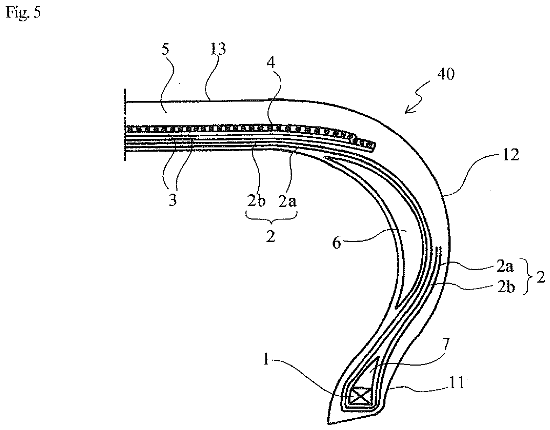

Further, Fig. 5 illustrates a half sectional view illustrating still another example of a pneumatic tire of the present invention in the width direction. The illustrated pneumatic tire 40 is a run flat tire having the same constitution as the pneumatic tire 30 illustrated in Fig. 4, except that the tire comprises a pair of side-reinforcing rubber layers 6 having a crescent-shaped meridional cross section all or almost all over the both side wall portions 12 along the inner surface of the carcass 2.

Here, in the examples illustrated in Figs. 4 and 5, only a cap ply covering the whole width of the belt layer is disposed as the belt reinforcing layer 4, while in the present invention, the disposition of the belt reinforcing layer 4 is not indispensable. Also, a layer ply covering on both the end portions of the belt layer may be disposed as the belt reinforcing layer 4. The same applies to tires illustrated in Figs. 1 and 3. The belt reinforcing layer 4 may be constituted only by a layer ply, and the number of respective plies is not particularly restricted. The cap ply and the layer ply are individually composed of rubberized reinforcing cord layer which is substantially disposed in the tire circumferential direction. The belt layer is usually composed of a rubber layer having cords which extend obliquely with respect to the tire equatorial plane, and preferably, composed of at least one layer of rubberized steel cord layer. In the illustrated example, two belt layers are piled such that the cords which constitute the belt layer intersect each other to constitute a belt layer 3.

In the present invention, as illustrated in the figure, a bead filler 7 disposed on the outer side of the bead core 1 in the tire radial direction has a triangle shaped cross section having a height of 15 mm or smaller, particularly, 10 mm or smaller. As mentioned above, in a conventional tire in which the height of the bead filler is large, a compression input repeatedly applied by an input of a product is applied to a carcass cord, decrease in the strength of the carcass cord of the turn-up portion is accelerated and the tire may break due to carcass cord breakage. The carcass cord is expected that the strength is hard to decrease due to compression input, in other word, the carcass cord is expected to have a good fatigue performance. In the present invention, when a bead filler 7 is made to have a small shape, the turn-up portion of the carcass cord is just along the inner side of the tire. The carcass cord therefore exists on the outer side of the flexural deformation when a flexural input using as a fulcrum point a contact point between the rim flange and the tire is applied to the vicinity of the bead portion when a load is applied, and as the result, not compression input but only a tension input is applied to the cord. By this, acceleration of decrease in the strength of the carcass cord of the turn-up portion due to repeated flexural deformation can be suppressed, and the occurrence of failure due to cord breakage can be suppressed, whereby tire performances such as driving stability can be controlled without taking into account the fatigue performance of the cord. As the result, even a high rigidity carcass cord secures product durability, while enjoying a benefit of improving drivability.

Here, in the present invention, the height of the bead filler 7 means the height of the bead filler 7 in the radial direction in a condition in which a load is not applied when the tire is assembled on an application rim and is inflated to a standard air pressure. The application rim refers to a rim defined in the following standard. The normal air pressure refers to an air pressure defined corresponding to the maximum load capacity in the standard below. The "standard" is an industrial standard effective in the region where the tire is manufactured or used. For example, in US, the standard is "Year Book" by The Tire and Rim Association Inc.; in Europe, the standard is "Standards Manual" by The European Tire and Rim Technical Organization; and in Japan, the standard is JATMA Year book by Japan Automobile Tyre Manufacturers Association.

In the present invention, the height of the bead filler 7 is set to 15 mm or less because since the shape and the value of the rim flange are standardized, by setting the height of the bead filler 7 to 15 mm or less regardless of the size, the carcass cord can avoid a portion where a compression input is applied. When the height of the bead filler 7 is 15 mm or less, a compression input may be applied to on the verge of the ply end due to the flexural rigidity around the bead, inner pressure conditions, input or the like. It is therefore suitable that, by setting the height of the bead filler 7 to 10 mm or smaller, compression input can surely be avoided regardless of the type of the tire. The lower limit of the height of the bead filler 7 is not particularly limited. For example the height can also be 0 mm (no bead filler rubber).

In the present invention, it is particularly suitable that both the condition relating to the height of the turn-up end portion of the above-mentioned carcass ply and the condition relating to the height of the bead filler are satisfied. Namely, it is preferable that the turn-up end portion of the carcass ply is turned up at least to the upper end position in the tire radial direction of the bead core, the height of the turn-up end portion of the carcass ply in the tire radial direction from the upper end portion of the bead core in the tire radial direction is 15 mm or smaller and a bead filler has a triangle shaped cross section having a height of 15 mm or smaller.

In the present invention, only the combination of the application of a high rigidity cellulose fiber cord to a carcass cord and the specific carcass disposition is important, by which a desired effect of the present invention can be obtained. The structure or material of the other members which constitutes a tire should not be particularly limited, known structure and material can be employed. For example, on the surface of the tread portion 13, a tread pattern (not illustrated) is formed as appropriate, and on the innermost layer, an inner liner (not illustrated) is formed. In the pneumatic tire of the present invention, as a gas with which the tire to be filled, a normal air or an air whose oxygen partial pressure is changed, or an inert gas such as nitrogen can be used.

Examples

The present invention will now be explained in detail by way of Examples.

(Examples 1 to 4 and Comparative Example 1 to 5)

A tire of a type as illustrated in Fig. 1 (size 245/45R19) was manufactured. Shown in Tables 1 and 2 below are the material, the structure, the twist coefficient of the reinforcing cord of the carcass ply, and the cord modulus of elasticity of the reinforcing cord of the carcass ply under a stress under which a force of 29.4 N per reinforcing cord was applied to at a temperature of 180°C. For the fiber cord, a dip liquid having a molar ratio of formaldehyde/resorcinol of 1.98, resorcinol·formaldehyde/latex solid % by mass of 16.0 and a molar ratio of $(NaOH + NH_4OH)$/latex of 0.80 was used. For the carcass ply, a covering rubber comprising 100 parts by mass of natural rubber, 50 parts by mass of HAF carbon black and 3 parts by mass of sulfur was used. The end count of the carcass ply into the tire was 70/10 cm. The modulus of elasticity of the reinforcing cord at 180°C was, as mentioned above, calculated by using the stress-elongation curve of the cord, estimating the force applied to one cord at the time when a tire was inflated to the inner pressure to the time when load was applied to a tire as 29.4 N and drawing a tangent line on the stress-elongation curve under a stress of 29.4 N (see Fig. 2).

For each test tire, the drum durability and the driving stability when the tire was inflated to a normal inner pressure were tested to evaluate the performances according to the following procedure.

<Drum durability>

A durability drum running test was carried out with a drum tester in which the surface of the drum was smooth, which was made of steel and in which the diameter ofthe drum was 1.707 m, by controlling the ambient temperature to $30\pm3$°C, using a rim having a standard rim size defined by JATMA and applying a standard load capacity according to JATMA standard at a standard inner pressure according to JATMA standard, to measure the distance until the tire was broke. The evaluations were indicated in Tables 1 and 2 as indices taking the case of Comparative Example 1 as 100. The larger the value of the index, the more favorable the durability.

<Driving stability>

A test tire employing a rim having a standard rim size defined by JATMA and inflated to a standard inner pressure according to a JATMA standard was mounted on a real car, a drivability feeling test was carried out by a driver and the driving stability was scored from 0 to 100. The obtained results are indicated in Tables 1 and 2.

[Table 1]

| | | | Example 1 | Example 2 | Example | Example 4 |
|---|---|---|---|---|---|---|
| Carcass ply | | Ply turn-up height h (mm) | 10 | 15 | 10 | 10 |
| | | Cord structure (dtex/cord) | 1840/3 | 1840/3 | 1840/3 | 1840/2 |
| | | Cord material | Lyocell | Lyocell | Lyocell | Lyocell |
| | | Cord twist coefficient | 0.62 | 0.62 | 0.55 | 0.52 |
| | | Modulus of elasticity at 18Q°C·29.4N (cN/dtex)[1] | 60 | 60 | 48 | 62 |
| Durability at normal inner pressure (index) | | | 110 | 104 | 110 | 105 |

(continued)

|  | Example 1 | Example 2 | Example | Example 4 |
|---|---|---|---|---|
| Driving stability (score) | 90 | 80 | 80 | 85 |

*1: Tensile modulus of elasticity when a stress of 29.4 N was loaded per one cord at 180°C.

[Table 2]

| | | Comparative Example 1 | Comparative Example 2 | Comparative Example 3 | Comparative Example 4 | Comparative Example 5 |
|---|---|---|---|---|---|---|
| Carcass ply | Ply turn-up height h (mm) | 20 | 50 | 20 | 10 | 10 |
| | Cord structure (dtex/cord) | 1840/3 | 1840/3 | 1840/3 | 1840/3 | 2200/2 |
| | Cord material | Rayon | Rayon | Lyocell | Lyocell | PET |
| | Cord twist coefficient | 0.52 | 0.52 | 0.62 | 0.83 | 0.52 |
| | Modulus of elasticity at 180°C·29.4 N (cN/dtex)*1 | 37 | 37 | 60 | 37 | 26 |
| Durability at normal inner pressure (index) | | 100 | 90 | 70 | 95 | 110 |
| Driving stability (score) | | 70 | 80 | 90 | 70 | 55 |

As illustrated in the above Tables 1 and 2, tires in Examples 1 to 4 were found to be more excellent than tires in Comparative Examples in both durability and driving stability.

(Examples 5 to 7 and Comparative Examples 6 to 8)

Pneumatic radial tires of Examples and Comparative Examples of a tire size 215/45R17 were manufactured by applying as the carcass cord an organic fiber cord satisfying the conditions indicated in the Table below and by changing the height of the bead filer of the triangle shaped cross section as indicated in the Table below. The number of carcass ply used was one, and the carcass cord was turned up around the bead core from the inside of the tire to the outside of the tire. Two belt layers were used and the belt layer was composed of rubberized steel cord layer extending obliquely at an angle of ±30° with respect to the tire equatorial plane. The formulation of the dip liquid, the formulation of covering rubber of a carcass ply, the end count of the carcass ply and the method of calculating the tensile modulus of elasticity were the same as in the above mentioned Example 1. For the obtained test tires, the durability and the drivability were evaluated according to the following.

<Durability>

Each test tire was run at 80 km/h on the drum tester under a condition of a normal inner pressure and a standard load, and time until the tire breaks was measured. The results were indicated as indices taking the time till the occurrence of breakage in Comparative Example 6 as 100. The larger the value of the index, the more favorable the durability.

<Drivability>

A test tire was mounted on a real car, a drivability feeling test was carried out by a driver and the drivability was scored from 0 to 100. The higher the score, the more favorable the drivability.
The obtained results are indicated in Table in combination.

[Table 3]

| | | Example 5 | Example 6 | Example 7 | Comparative Example 6 | Comparative Example 7 | Comparative Example 8 |
|---|---|---|---|---|---|---|---|
| Organic fiber cord | Material | Lyocell | Lyocell | Lyocell | Rayon | Lyocell | Lyocell |
| | Size | 1840dtex/3 | 1840dtex/3 | 1840dtex/2 | 1840dtex/3 | 1840dtex/3 | 1840dtex/3 |
| | Twist coefficient*2 | 0.62 | 0.55 | 0.62 | 0.52 | 0.62 | 0.83 |
| | Cord modulus of elasticity at 180°C·29.4 N (cN/dtex)*1 | 60 | 48 | 62 | 37 | 60 | 37 |
| Bead filler height (mm) | | 15 | 15 | 10 | 30 | 30 | 30 |
| Durability (index) | | 110 | 110 | 120 | 100 | 70 | 95 |
| Drivability (score) | | 90 | 80 | 90 | 70 | 90 | 70 |

*2: Twist coefficient Nt defined by

$$Nt = \tan\theta = 0.001 \times N \times \sqrt{(0.125 \times D/\rho)}$$

(where N is the number of twist of the cord (/10 cm), D is the value which is half of the total decitex of the cord (dtex) and p is the specific gravity of the cord (g/cm$^3$)).

As indicated in the Table 3 above, it is obvious that, for each test tire in Examples in which a high rigidity cellulose fiber cord satisfying the conditions of the present invention was used and in which the condition of the specific carcass disposition, in particular, the bead filler structure was satisfied, the balance between both the durability and the drivability was better and more favorable than that of test tires in Comparative Examples in which such conditions were not satisfied.

Description of Symbols

| 1 | bead core |
| 2 | carcass |
| 2a, 2b | carcass ply |
| 3 | belt |
| 4 | belt reinforcing layer |
| 5 | tread |
| 6 | side-reinforcing rubber layer |
| 7 | bead filler |
| 10, 20, 30, 40 | pneumatic radial tire |
| 11 | bead portion |
| 12 | side wall portion |
| 13 | tread portion |

**Claims**

1. A pneumatic tire (10, 20, 30, 40) composed of tread portions (13), a pair of side wall portions (12) extending from side portions of the tread portions (13) to inward in the tire radial direction, and bead portions (11) connected to the inner end in the tire radial direction of the side wall portions (12), which are reinforced by a carcass (2) composed of one or more carcass plies (2a, 2b) composed of cellulose fiber cord covered with a coating rubber, wherein the tensile modulus of elasticity of the cellulose fiber cord under a stress load of 29.4N per cord at a temperature of 180°C is 40 cN/dtex or higher, and all of the carcass cords are turned up around each bead core (1) embedded at the pair of bead portions (11) from the inside toward the outside of the tire,
**characterised in that** the turn-up end portion of the carcass ply is turned up at least to the upper end position in the tire radial direction of the bead core (1) and the height of the turn-up end portion of the carcass ply in the tire radial direction from the upper end portion ofthe bead core (1) in the tire radial direction is 15 mm or smaller.

2. The pneumatic tire (10, 20, 30, 40) according to claim 1, wherein a bead filler (7) disposed outside in the tire radial direction ofthe bead core (1) has a triangle shaped cross section having a height of 15 mm or smaller.

3. The pneumatic tire (10, 20, 30, 40) according to claim 1, wherein the turn-up end portion ofthe carcass ply is turned up at least to the upper end position in the tire radial direction ofthe bead core (1), the height of the turn-up end portion of the carcass ply in the tire radial direction from the upper end portion of the bead core (1) in the tire radial direction is 15 mm or smaller, and a bead filler (7) disposed outside in the tire radial direction ofthe bead core (1) has a triangle shaped cross section having a height of 15 mm or smaller.

4. The pneumatic tire (10, 20, 30, 40) according to claim 1, wherein the tensile modulus of elasticity ofthe cellulose fiber cord under a stress load of 29.4N per cord at a temperature of 180°C is 100 cN/dtex or lower.

5. The pneumatic tire (10, 20, 30, 40) according to claim 1, wherein the cellulose fiber cord is a lyocell fiber cord.

6. The pneumatic tire (10, 20, 30, 40) according to claim 1, wherein the twist coefficient Nt of the cellulose fiber cord represented by the following formula:

$$Nt = \tan\theta = 0.001 \times N \times \sqrt{(0.125 \times D/\rho)}$$

(where N is the number of twist of the cord (/10 cm), p is the specific gravity of the cord (g/cm$^3$) and D is the value which is half of the total decitex of the cord (dtex)) is from 0.5 to 0.8.

7. The pneumatic tire (10, 20, 30, 40) according to claim 1, wherein the total denier ofthe cellulose fiber cord is from 3500 dtex to 5600 dtex

8. The pneumatic tire (10, 20, 30, 40) according to claim 2, wherein the height of the turn-up end portion ofthe carcass ply in the tire radial direction from the upper end portion ofthe bead core (1) in the tire radial direction is 10 mm or smaller.

9. The pneumatic tire (10, 20, 30, 40) according to claim 1, which is a run flat tire comprising a side-reinforcing rubber layer (6) having a crescent-shaped cross section in the tire width direction all or almost all over the side wall portion (12) along the inner surface of the carcass (2).

**Patentansprüche**

1. Luftreifen (10, 20, 30, 40), bestehend aus Laufflächenabschnitten (13), einem Paar von Seitenwandabschnitten (12), die sich von Seitenabschnitten der Laufflächenabschnitte (13) in der Reifenradialrichtung nach innen erstrecken, und Wulstabschnitten (11), die mit dem in der Reifenradialrichtung inneren Ende der Seitenwandabschnitte (12) verbunden sind, die durch eine Karkasse (2) verstärkt sind, bestehend aus einer oder mehreren Karkassenlagen (2a, 2b), bestehend aus Zellulosefaserkord, bedeckt mit einem Überzugsgummi, wobei
der Zugelastizitätsmodul des Zellulosefaserkords unter einer Spannungsbelastung von 29,4 N je Kord bei einer Temperatur von 180°C 40 cN/dtex oder mehr beträgt und alle Karkassenkords um jeden bei dem Paar von Wulstabschnitten (11) eingebetteten Wulstkern (1) von der Innenseite zu der Außenseite des Reifens hin umgeschlagen sind,
**dadurch gekennzeichnet, dass** der umgeschlagene Endabschnitt der Karkassenlage wenigstens zu der in der Reifenradialrichtung oberen Endposition des Wulstkerns (1) umgeschlagen ist und die Höhe des umgeschlagenen Endabschnitts der Karkassenlage in der Reifenradialrichtung von der oberen Endposition des Wulstkerns (1) in der Reifenradialrichtung 15 mm oder weniger beträgt.

2. Luftreifen (10, 20, 30, 40) nach Anspruch 1, wobei ein Kernreiter (7), der in der Reifenradialrichtung außerhalb des Wulstkerns (1) angeordnet ist, einen dreiecksförmigen Querschnitt hat, der eine Höhe von 15 mm oder weniger hat.

3. Luftreifen (10, 20, 30, 40) nach Anspruch 1, wobei der umgeschlagene Endabschnitt der Karkassenlage wenigstens zu der in der Reifenradialrichtung oberen Endposition des Wulstkerns (1) umgeschlagen ist, die Höhe des umgeschlagenen Endabschnitts der Karkassenlage in der Reifenradialrichtung von der oberen Endposition des Wulstkerns (1) in der Reifenradialrichtung 15 mm oder weniger beträgt und ein Kernreiter (7), der in der Reifenradialrichtung außerhalb des Wulstkerns (1) angeordnet ist, einen dreiecksförmigen Querschnitt hat, der eine Höhe von 15 mm oder weniger hat.

4. Luftreifen (10, 20, 30, 40) nach Anspruch 1, wobei der Zugelastizitätsmodul des Zellulosefaserkords unter einer Spannungsbelastung von 29,4 N je Kord bei einer Temperatur von 180°C 100 cN/dtex oder weniger beträgt.

5. Luftreifen (10, 20, 30, 40) nach Anspruch 1, wobei der Zellulosefaserkord ein Lyocellfaserkord ist.

6. Luftreifen (10, 20, 30, 40) nach Anspruch 1, wobei der Drehungsbeiwert Nt des Zellulosefaserkords, der durch die folgende Formel dargestellt wird:

$$Nt = \tan\theta = 0{,}001 \times N \times \sqrt{(0{,}125 \times D/\rho)} ,$$

(wobei N die Drehungsanzahl des Kords (/10 cm) ist, p die relative Dichte des Kords (g/cm$^3$) ist und D der Wert ist, der die Hälfte des gesamten Dezitex-Wertes des Kords (dtex) ist, von 0,5 bis 0,8 beträgt.

7. Luftreifen (10, 20, 30, 40) nach Anspruch 1, wobei der gesamte Denier-Wert des Zellulosefaserkords von 3500 dtex bis 5600 dtex beträgt.

8. Luftreifen (10, 20, 30, 40) nach Anspruch 2, wobei die Höhe des umgeschlagenen Endabschnitts der Karkassenlage in der Reifenradialrichtung von der oberen Endposition des Wulstkerns (1) in der Reifenradialrichtung 10 mm oder weniger beträgt.

9. Luftreifen (10, 20, 30, 40) nach Anspruch 1, der ein Notlaufreifen ist, der eine seitenverstärkende Gummilage (6) umfasst, die einen halbmondförmigen Querschnitt in der Reifenbreitenrichtung über den gesamten oder nahezu den gesamten Seitenwandabschnitt (12) entlang der Innenfläche der Karkasse (2) hat.

**Revendications**

1. Bandage pneumatique (10, 20, 30, 40), comprenant des parties de bande de roulement (13), une paire de parties de flanc (12) s'étendant à partir des parties latérales des parties de bande de roulement (13) vers l'intérieur dans la direction radiale du bandage pneumatique, et des parties de talon (11) connectées à l'extrémité interne, dans la direction radiale du bandage pneumatique, des parties de flanc (12) qui sont renforcées par une carcasse (2) comprenant une ou plusieurs nappes de carcasse (2a, 2b) composées de câblés de fibres de cellulose recouverts d'une gomme de revêtement ; dans lequel
le module d'élasticité en traction du câblé de fibres de cellulose, en présence d'une charge de contrainte de 29,4 N par câblé et d'une température de 180°C, est de 40 cN/dtex ou plus, tous les câblés de la carcasse étant retournés autour de chaque tringle (1) noyée dans la paire de parties de talon (11), de l'intérieur vers l'extérieur du bandage pneumatique ;
**caractérisé en ce que** la partie d'extrémité retournée de la nappe de carcasse est retournée au moins jusqu'à la position d'extrémité supérieure, dans la direction radiale de la tringle (1), la hauteur de la partie d'extrémité retournée de la nappe de carcasse, dans la direction radiale du bandage pneumatique, à partir de la partie d'extrémité supérieure de la tringle (1), dans la direction radiale du bandage pneumatique, étant de 15 mm ou moins.

2. Bandage pneumatique (10, 20, 30, 40) selon la revendication 1, dans lequel un bourrage sur tringle (7) agencé à l'extérieur, dans la direction radiale du bandage pneumatique, de la tringle (1) a une section transversale en forme de triangle ayant une hauteur de 15 mm ou moins.

3. Bandage pneumatique (10, 20, 30, 40) selon la revendication 1, dans lequel la partie d'extrémité retournée de la nappe de carcasse est retournée au moins jusqu'à la position d'extrémité supérieure, dans la direction radiale du bandage pneumatique, de la tringle (1), la hauteur de la partie d'extrémité retournée de la nappe de carcasse, dans la direction radiale du bandage pneumatique, à partir de la partie d'extrémité supérieure de la tringle (1), dans la direction radiale du bandage pneumatique, correspondant à 15 mm ou moins, et un bourrage sur tringle (7) agencé à l'extérieur, dans la direction radiale de la tringle, (1) ayant une section transversale en forme de triangle ayant une hauteur de 15 mm ou moins.

4. Bandage pneumatique (10, 20, 30, 40) selon la revendication 1, dans lequel le module d'élasticité en traction du câblé de fibres de cellulose, en présence d'une charge de contrainte de 29,4 N par câblé, et d'une température de 180°C, est de 100 cN/dtex ou moins.

5. Bandage pneumatique (10, 20, 30, 40) selon la revendication 1, dans lequel le câblé de fibres de cellulose est un câblé de fibres de Lyocell.

6. Bandage pneumatique (10, 20, 30, 40) selon la revendication 1, dans lequel le coefficient de torsion Nt du câblé de fibres de cellulose représenté par la formule

$$Nt = \tan\theta = 0{,}001 \times N \times \sqrt{(0{,}125 \times D/p)}$$

(dans laquelle N est le nombre de torsions du câblé (/10 c), p étant la gravité spécifique du câblé (g/cm$^2$) et D étant la valeur correspondant à la moitié du décitex total (dtex)), est compris entre 0,5 et 0,8.

7. Bandage pneumatique (10, 20, 30, 40) selon la revendication 1, dans lequel le denier total du câblé de fibres de cellulose est compris entre 3500 dtex et 5600 dtex.

**8.** Bandage pneumatique (10, 20, 30, 40) selon la revendication 2, dans lequel la hauteur de la partie d'extrémité retournée de la nappe de carcasse, dans la direction radiale du bandage pneumatique, à partir de la partie d'extrémité supérieure (1), dans la direction radiale du bandage pneumatique, est de 10 mm ou moins.

**9.** Bandage pneumatique (10, 20, 30, 40) selon la revendication 1, constitué par un bandage pneumatique à roulage à plat, comprenant une couche de gomme de renforcement latérale (6) ayant une section transversale en forme de croissant dans la direction de la largeur du bandage pneumatique, sur l'ensemble ou pratiquement l'ensemble de la partie de flanc (12), le long de la surface interne de la carcasse (2).

Fig. 1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7081331 A
- JP 2005199763 A
- JP 2009070119 A
- JP 2009001073 A
- JP 2009057008 A
- US 2002195185 A
- JP 60028848 A
- JP 11504995 A